# EUROPEAN PATENT APPLICATION

(11) **EP 3 502 287 A1**
(43) Date of publication of application: **26.06.2019**
(21) Application number: 17841409.0
(22) Date of filing: 07.08.2017
(51) Int. Cl.: C22C 9/02, H01M 4/66, C22F 1/00, C22F 1/02, C22F 1/08

(54) **COPPER ALLOY FOIL**

(30) Priority: 16.08.2016 JP 2016159716
(71) Applicant: Furukawa Electric Co., Ltd., Chiyoda-ku Tokyo 100-8322 (JP); UACJ FOIL SANGYO CORPORATION, Kusatsu-shi Shiga 5250042 (JP)
(72) Inventor: NAKANO Junsuke, Tokyo 100-8322 (JP); HOSHINO Toshiyuki, Kusatsu-shi Shiga 525-0042 (JP)
(74) Representative: Weickmann & Weickmann PartmbB
(86) International application number: PCT/JP2017/028576
(87) International publication number: WO 2018/034184

(57) **Abstract**

It is an object of the present invention to provide a copper alloy foil that achieves both electrical conductivity and heat resistance to solve the above-mentioned problem. It is another object of the present invention to provide a copper alloy foil that, when used for a negative electrode current collector of a secondary battery, exhibits improved adhesion to an active material layer.

A copper alloy foil contains 0.005 to 0.015 wt% of Sn and has an oxygen content of 0.0020 wt% or less, the balance being Cu and inevitable impurities. A Sn-rich layer is formed on at least one surface layer of the copper alloy foil.

## Description

### Technical Field

The present invention relates to a copper alloy foil that achieves both electrical conductivity and heat resistance and particularly relates to a copper alloy foil used as a negative electrode current collector of a secondary battery.

### Background Art

A copper alloy foil is used as a negative electrode current collector of a secondary battery such as a lithium ion battery. In recent years, increased capacity, decreased volume and the like of batteries have led to new requirements in the copper alloy foil to be used. For example, in a process of manufacturing a current collector, an active material is applied to a copper alloy foil and dried, since the copper alloy foil is required to have high heat resistance so that the copper alloy foil is not softened. Peeling may occur in the interface between the copper alloy foil and an active material layer due to a difference in expansion between the active material layer and the copper alloy foil during the charging and discharging of the secondary battery, but high adhesion between the copper alloy foil and the active material is required for performing this control. Naturally, electrodes also require high electrical conductivity. Under the present circumstances, copper alloy rolled foils such as electrodeposited copper foil, tough pitch copper (TPC), and oxygen-free copper (OFC) are used as the copper alloy foil for a negative electrode current collector.

Various proposals have been made for these requirements. For example, Patent Literature 1 discloses a copper foil that has high strength and can maintain sufficient strength even after being subjected to thermal history at 100 to 200°C.

### Document List

### Patent Literature

Patent Literature 1: Japanese Patent Application Publication No. 2000-303128

### Summary of Invention

### Technical Problem

However, heat resistance and electrical conductivity have a trade-off relation and a technique that is inexpensive and effective for obtaining the adhesion to the active material is not established. Materials having all the characteristics in a balanced manner are desired.

It is an object of the present invention to provide a copper alloy foil that achieves both electrical conductivity and heat resistance to solve the above-mentioned problem. It is another object of the present invention to provide a copper alloy foil that, when used for a negative electrode current collector of a secondary battery, exhibits improved adhesion to an active material layer.

### Solution to Problem

The gist of the present invention is as follows.
(1) A copper alloy foil contains 0.005 to 0.015 wt% of Sn and has an oxygen content of 0.0020 wt% or less, the balance being Cu and inevitable impurities,
   wherein a Sn-rich layer is formed on at least one surface layer of the copper alloy foil.
(2) The copper alloy foil further contains 0.0005 to 0.0030 wt% of P.
(3) A Sn concentration from a surface of the copper alloy foil to a position of a depth of 0.1 µm in a thickness direction of the copper alloy foil is 1.1 to 2.0 times the Sn concentration in a deeper section separated by more than 1 µm from the surface of the copper alloy foil.

### Brief Description of Drawings

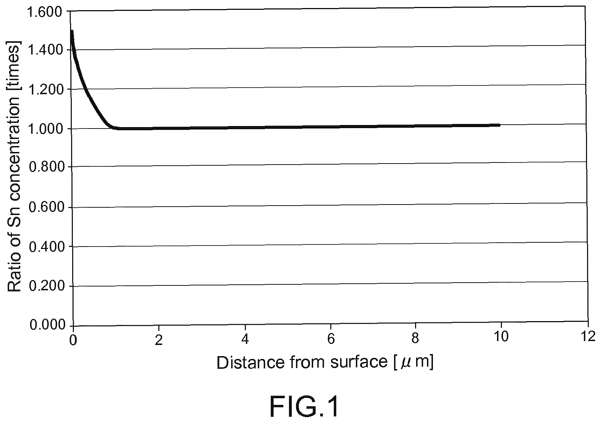

Fig. 1 is a view schematically showing the ratio of the Sn concentration of a copper alloy foil.

### Description of Embodiments

A copper alloy foil (or copper alloy strip) of the present invention contains 0.005 to 0.015 wt% of Sn, wherein a Sn-rich layer is formed on at least one surface layer of the copper alloy foil, and preferably on both surface layers thereof. The addition of Sn makes it possible to provide high heat resistance, while the copper alloy foil has high electrical conductivity. The Sn-rich layer is formed on the surface layer, whereby the wettability of the surface layer is improved, which can provide improved adhesion to an active material layer. When the content of Sn is less than 0.005 wt%, sufficient heat resistance cannot be obtained and a Sn-rich layer having a sufficient concentration cannot be formed, with the result that the adhesion to the active material layer cannot be improved. On the other hand, when the content of Sn is more than 0.015 wt%, electrical conductivity is largely deteriorated.

The oxygen content of the copper alloy foil is 0.0020 wt% or less. If Sn and oxygen coexist, an oxide is formed. Therefore, the existence ratio of Sn that exists as the oxide increases when the oxygen content is more than 0.0020 wt%, and an effect provided by Sn, that is, an effect of providing high heat resistance and improved adhesion cannot be obtained.

The balance of the copper alloy foil is Cu and inevitable impurities.

It is preferable that the copper alloy foil of the present invention further contain 0.0005 to 0.0030 wt% of P. Similar to Sn, P can also improve heat resistance and has a deoxidizing effect in a molten alloy when a copper alloy melts. The simultaneous addition of Sn and P tends to increase strength as compared with independent addition of Sn. The increase in strength can prevent deformation caused by a difference in expansion between a copper material and an active material occurring during the charging and discharging of a secondary battery.

When the content of P is less than 0.0005 wt%, an effect provided by adding P is not obtained. On the other hand, when the content of P is more than 0.0030 wt%, electrical conductivity is largely deteriorated.

A Sn concentration from a surface of the copper alloy foil to a positon of a depth of 0.1 µm in a thickness direction of the copper alloy foil is preferably 1.1 to 2.0 times the Sn concentration in a deeper section separated by more than 1 µm from the surface of the copper alloy foil, and more preferably 1.4 to 1.7 times. When the Sn concentration of the surface layer is less than 1.1 times that of the deeper section, adhesion improvement is insufficient. On the other hand, even when Sn is segregated in the surface layer at a concentration ratio of more than 2.0 times, the adhesion is not improved to a certain level or more. As shown in Fig. 1, the ratio of the Sn concentration of the copper alloy foil gradually decreases to a position separated by about 1 µm from the surface and is fixed at a position separated by more than 1 µm. However, the present invention is not limited thereto and the Sn concentration of the surface layer part is higher than an average Sn concentration in the thickness direction, whereby the effect can be obtained.

The copper alloy foil of the present invention achieves both electrical conductivity and heat resistance, and exhibits excellent adhesion to the active material, whereby the copper alloy foil is particularly preferably used for a negative electrode current collector of a secondary battery. However, the copper alloy foil of the present invention can be applied to a foil material requiring electrical conductivity and heat resistance, for example, a copper alloy foil for FPC, and a copper material used for a shield material of a cable.

### Examples

Hereinafter, the present invention will be described in more detail based on Examples, however the present invention is not limited to Examples.

Each of the alloys having compositions described in Table 1 was melted in a high-frequency melting furnace and cast in a size having a thickness of 30 mm, a width of 100 mm, and a length of 150 mm. The cast slab was held at 930°C for 2 hours, and then hot rolled to a thickness of 11 mm. After hot rolling, the cast slab was immersed in water and immediately cooled. In order to remove an oxide film formed on a surface, the surfaces of the cast slab were shaved off so that its thickness was set at 9 mm, and the cast slab was then repeatedly cold rolled and heated to produce a foil material having a plate thickness of 0.02 mm. A cold rolling ratio after the final heat treatment was set to 90%, and the air-fuel ratio of a control burner in an atmosphere in which the final heat treatment was performed was changed to 0.85 to 1.0, and a small amount of oxygen concentration in the furnace was changed to control the Sn concentration of a surface layer. Among copper and Sn, Sn is easily oxidized and elements that are easily oxidized tend to be rich in the surface layer. A phenomenon is presumed to occur in which the oxidization causes a pure Sn ingredient (Sn ingredient that is not oxidized) in the surface layer to be decreased, pure Sn is diffused to the surface layer according to a concentration gradient, and Sn diffused to the surface layer is oxidized.

When the air-fuel ratio is less than 0.85, incomplete combustion is high, which causes soot to be generated in a large amount, whereby the air-fuel ratio of less than 0.85 is not suitable for operation. On the other hand, when the air-fuel ratio is more than 1.0, a material is intensively oxidized, and the oxidized material is not suitable for subsequent use.

Samples (Examples 1 to 12, Conventional Example, Comparative Examples 1 to 7) were cut from the material thus produced and evaluated for various characteristics. These were collectively shown in Table 1.

The Sn concentration of the surface layer was analyzed in a depth direction with an Augier electronic spectroscopic analyzer and expressed by a ratio (C/D) of an average Sn concentration (C) from a surface to a position of a depth of 0.1 µm in a thickness direction according to a sputtering rate to an average Sn concentration (D) from a position of a depth of 1 µm to a position of a depth of 1.2 µm in the thickness direction.

During the evaluation of heat resistance, a heat treatment was performed at 200 °C for 1 hour and a change in tensile strength before and after the heat treatment was obtained. As for a ratio (b/a) of strength (b) following the heat treatment to initial strength (a), b/a ≥ 0.6 was determined to be favorable.

Tensile strength and electrical conductivity were tested according to methods specified in normal JISZ2441 and JISH0501. An electrical conductivity of 89 or more was determined to be favorable.

Adhesion to an active material layer was evaluated by a method whereby a negative electrode active material layer was applied to a copper alloy foil and peel strength was measured. Natural graphite powder as a negative electrode active material, styrene butadiene rubber (SBR) as a binder, carboxyl cellulose (CMC) as a thickener and pure water as a solvent were used, and the natural graphite powder, the CMC and the SBR were mixed at a weight ratio of 97 : 1 : 2 to prepare a negative electrode mixture. The negative electrode mixture was applied with a thickness of 90 µm on the copper alloy foil and dried at 80°C for 10 minutes and then press treated, thereby forming a negative electrode active material layer. The thickness of the prepared electrode was 70 µm and the electrode density was 1.5 g/cm³. The negative electrode thus obtained was cut in a width of 20 mm and a length of 180 mm. The surface to which the negative electrode active material layer was applied was adhered to a peel test jig by means of a double-sided pressure-sensitive adhesive tape, and the negative electrode was pulled at a speed of 100 mm/min at 90 degrees with respect to the adhered surface to measure peel strength when the negative electrode active material layer was peeled off from the copper alloy foil. The result of Conventional Example was taken as E, and each result of Examples and Comparative Examples was taken as F. Evaluation was made according to a ratio F/E. F/E ≥ 1.1 was determined to be favorable.

As comprehensive evaluation, a case in which heat resistance was 0.6 or more, electrical conductivity was 89 %IACS or more and adhesion strength was more than 1.5 was evaluated as Excellent. Heat resistance was 0.6 or more, electrical conductivity was 89 %IACS or more and adhesion strength was 1.1 or more, which was evaluated as Good. A case in which any one of heat resistance, electrical conductivity and adhesion was poor was evaluated as Poor.

According to Table 1, it is found that all of Examples 1 to 12 exhibit excellent characteristics.

Since the Conventional Example does not contain both Sn and P, the Conventional Example has poor heat resistance.

Since the Sn content in Comparative Example 1 is less than the basis of the present invention, the heat resistance of Comparative Example 1 is not much different from that of Conventional Example.

Since the Sn content in Comparative Example 2 is more than the basis of the present invention, Comparative Example 2 has poor electrical conductivity.

Since the Sn content in Comparative Example 3 is more than the basis of the present invention and the P content in Comparative Example 3 is also more than the basis of the present invention, Comparative Example 3 has lower electrical conductivity.

Since the oxygen content in Comparative Examples 4 and 5 is more than the basis of the present invention, Comparative Examples 4 and 5 have lower heat resistance.

Since a Sn-rich layer is not formed on the surface layer in Comparative Examples 6 and 7, Comparative Examples 6 and 7 have poor adhesion.

### [Table 1]

**[Table 1]**

| | Cu [wt%] | Sn [wt%] | P [wt%] | O [wt%] | Sn concentration ratio in surface layer | Heat resistance (tensile strength) | Electrical conductivity | Adhesion peel strength ratio | Comprehensive evaluation |
|---|---|---|---|---|---|---|---|---|---|
| | | | | | C/D | b/a | %IACS | F/E | |
| Example 1 | Balance | 0.005 | - | 0.0018 | 1.1 | 0.6 | 96 | 1.1 | Good |
| Example 2 | Balance | 0.01 | - | 0.002 | 1.3 | 0.65 | 94 | 1.3 | Good |
| Example 3 | Balance | 0.015 | - | 0.002 | 1.4 | 0.7 | 92 | 1.6 | Excellent |
| Example 4 | Balance | 0.01 | 0.0005 | 0.002 | 1.3 | 0.7 | 91 | 1.3 | Good |
| Example 5 | Balance | 0.01 | 0.001 | 0.0019 | 1.7 | 0.72 | 90 | 1.7 | Excellent |
| Example 6 | Balance | 0.01 | 0.003 | 0.002 | 1.7 | 0.76 | 89 | 1.7 | Excellent |
| Example 7 | Balance | 0.01 | 0.001 | 0.002 | 1.1 | 0.7 | 91 | 1.1 | Good |
| Example 8 | Balance | 0.01 | 0.001 | 0.002 | 1.5 | 0.7 | 91 | 1.5 | Good |
| Example 9 | Balance | 0.01 | 0.001 | 0.002 | 2 | 0.7 | 91 | 2 | Good |
| Example 10 | Balance | 0.01 | 0.001 | 0.0005 | 1.2 | 0.7 | 90 | 1.2 | Good |
| Example 11 | Balance | 0.01 | 0.001 | 0.001 | 1.2 | 0.7 | 90 | 1.2 | Good |
| Example 12 | Balance | 0.01 | 0.001 | 0.0011 | 2.3 | 0.7 | 91 | 2 | Good |
| Conventional Example | Balance | - | - | 0.021 | - | 0.5 | 101 | 1 | Poor |
| Comparative Example 1 | Balance | 0.004 | - | 0.0005 | 1 | 0.55 | 97 | 1 | Poor |
| Comparative Example 2 | Balance | 0.02 | - | 0.0005 | 1.2 | 0.9 | 88 | 1.4 | Poor |
| Comparative Example 3 | Balance | 0.016 | 0.005 | 0.0005 | 1.5 | 0.73 | 86 | 1.6 | Poor |
| Comparative Example 4 | Balance | 0.011 | 0.001 | 0.003 | 1.3 | 0.55 | 91 | 1.4 | Poor |
| Comparative Example 5 | Balance | 0.01 | 0.001 | 0.0022 | 1.3 | 0.55 | 92 | 1.4 | Poor |
| Comparative Example 6 | Balance | 0.01 | 0.001 | 0.0011 | 1 | 0.7 | 91 | 1 | Poor |
| Comparative Example 7 | Balance | 0.011 | 0.0009 | 0.0011 | 0.9 | 0.7 | 91 | 1 | Poor |

## Claims

1. A copper alloy foil comprising 0.005 to 0.015 wt% of Sn and having an oxygen content of 0.0020 wt% or less, the balance being Cu and inevitable impurities,
wherein a Sn-rich layer is formed on at least one surface layer of the copper alloy foil.

2. The copper alloy foil according to claim 1, further comprising 0.0005 to 0.0030 wt% of P.

3. The copper alloy foil according to claim 1 or 2, wherein a Sn concentration from a surface of the copper alloy foil to a position of a depth of 0.1 µm in a thickness direction of the copper alloy foil is 1.1 to 2.0 times the Sn concentration in a deeper section separated by more than 1 µm from the surface of the copper alloy foil.
